# EUROPEAN PATENT SPECIFICATION

(11) **EP 3 965 550 B1**
(45) Date of publication and mention of the grant of the patent: **22.02.2023**
(21) Application number: 20731202.6
(22) Date of filing: 06.05.2020
(51) Int. Cl.: A01G 9/02, A01G 9/029

(54) **A VASE FOR PLANTS OR SHRUBS**
VASE FÜR PFLANZEN ODER STRÄUCHER
VASE POUR PLANTES OU ARBUSTES

(30) Priority: 08.05.2019 IT 201900006636
(43) Date of publication of application: 16.03.2022
(73) Proprietor: Mannoni, Giorgio, Lija, Lja 1021 (MT)
(72) Inventor: Mannoni, Giorgio, Lija, Lja 1021 (MT)
(74) Representative: Dall'Olio, Christian
(86) International application number: PCT/IB2020/054281
(87) International publication number: WO 2020/225744

(56) References cited:
- WO-A2-2013/019105
- US-A1- 2016 174 469
- US-B1- 6 266 921

## Description

### FIELD OF THE INVENTION

The present invention relates to a vase for plants or shrubs, particularly suitable for plants or shrubs destined to be transplanted.

### DESCRIPTION OF THE PRIOR ART

In this sector, in recent years, vases have been researched with the aim of enabling, as far as possible, a normal development of the root system of plants or shrubs and combatting the phenomenon of spiralling which occurs in the roots of plants and shrubs in traditional vases, as explained in the following.

During the normal process of plant or shrub growth, first the roots develop, being the main roots, which grow vertically downwards to anchor the plant or the shrub to the terrain and enable correct absorption of water and nutrient substances. When the main roots stop growing they give rise to further roots, known as secondary, which tend to grow diagonally downwards, and in turn these, when they stop growing, give rise to tertiary roots, which develop prevalently in a horizontal direction. Secondary and tertiary roots guarantee plant or shrub anchoring to the surrounding terrain and enable better absorption of water and nutrient substances.

In traditional metal, plastic or terracotta vases, the development of the root system of plants and shrubs is obstructed as the main roots, having once reached the bottom of the vase, are deviated from the bottom and change growth direction up to meeting the lateral wall, by which they are further deviated and induced to roll into a spiral form. Spiralling of the main roots slows down the development of the secondary and tertiary roots. Further, in traditional vases, the secondary and tertiary roots also develop radially and contact the lateral wall of the vase, whence they are deviated in a downwards direction towards the bottom, where they undergo the same process as the main roots and roll in spiral fashion.

Therefore, the whole root system of the plant or shrub is concentrated towards the bottom, where the roots develop in a circular direction, tangling around one another. This phenomenon obstructs the normal absorption of water and nutrient substances and the normal growth of the plants.

In addition, the spiralling of the roots makes transplanting more problematic, both because the plant or shrub is less sturdy and therefore more exposed to risk of death by effect of what is known as transplant shock, and because when the plant or shrub is transplanted, the roots, which have undergone the process of spiralling, tend to continue develop in a circular manner, reducing the absorption of water and nutrient substances and limiting the growth of other roots. Therefore, before transplanting it is necessary to act manually on the roots wound in a spiral and tangled with one another, to make them suitable for transplanting.

Precisely in order to try to solve the above-described issues, in recent years various vases have been developed that are particularly suitable for plants or shrubs destined for transplanting, which vases are conformed to obstruct the spiralling of the roots. All of these vases exploit the principle of air-pruning, i.e. the phenomenon by which a root exposed to the air tends to dry out, causing dehydration of the apex cells at the tip of the root and thus stopping growth with an action alike to mechanical pruning, which facilitates emission of secondary roots. In particular, these vases have a series of through-holes on the lateral walls and on the bottom so that the roots, as they grow, can exit from the vase and thus, being exposed to air, might dehydrate and dry out, stimulating the growth of other roots. The overall effect of this phenomenon is the development of a sturdier root system comprising a larger number of roots.

The market offers various vases of this type. An example is described in European patent EP 2 779 821. The vase comprises: a lateral wall which forms a plurality of hollow projections and which comprises a first plurality of through-holes for enabling exit of roots of plants or shrubs; and a base which comprises a second plurality of through-holes for enabling exit of roots of plants or shrubs; and a plurality of deviating elements for deviating the roots towards the through-holes of the first plurality of through-holes. The presence and the triangular section of the deviators and the particular truncoconical conformation of the projections enables minimising the spiralling of the roots. However, this vase is constituted by a sheet of flexible material that has to be wound to construct the lateral wall, and by a base that has to be inserted in the lateral wall. Therefore, each time the vase is to be used the sheet of flexible material must be enveloped and the two ends fixed using a clip to form the lateral wall of the vase, and then the base inserted internally of the lateral wall thus-formed; and each time the plant or shrub is to be extracted from the vase to be transplanted the clip must be removed, the sheet constituting the lateral wall of the vase has to be opened out and the plant or shrub extracted. This requires the presence of operator staff for assembling and demounting the vase, with all the correlated drawbacks in terms of time and costs.

Further, the presence of the deviating elements and the conformation thereof poses problems in the correct distribution of the water internally of the terrain, causing a non-homogeneity in the irrigation of the plant. A vase which discloses the preamble of claim 1 is known from WO2013019105 A2.

### SUMMARY OF THE INVENTION

In the light of the above, the aim of the present invention consists in obviating the above-mentioned drawbacks.

The above aim is attained by a vase for plants or shrubs according to claim 1 and a tray for plants or shrubs according to claim 6.

The special conformation of the lateral wall, in particular the presence of the first plurality of internal cusps and the first plurality of external cusps, is advantageously such as to direct the roots, which as they develop contact the lateral wall of the vase, towards a through-hole of the first plurality of through-holes, guaranteeing the start-up of the air-pruning phenomenon and facilitating the development of a root system that is sturdier and more fibrous.

Further, and advantageously, the vase of the invention does not require assembly and demounting operations for its use: in fact, when extracting, all the user will need to do is push the bottom of the plant or shrub upwards, or pull the top of the plant or shrub upwards, to cause the terrain surrounding the plant or shrub to slide along the lateral wall towards the outside of the vase.

For this reason, the different inclination of the first wall and the second wall advantageously reduces the friction that is created, during the extraction of the plant or shrub from the vase, between the lateral wall and the terrain rested on the lateral wall, i.e. the terrain surrounding the plant or shrub. In other words, the different inclination of the first wall and the second wall facilitates the sliding of the terrain rested on the lateral wall along the lateral wall itself thus enabling the extraction of the plant or shrub in a simple and rapid way.

Therefore, given a same efficiency in minimising root spiralling, the vase that is the object of the present invention is easier to use and store with respect to the vases of the prior art.

### BRIEF DESCRIPTION OF THE DRAWINGS

Specific embodiments of the invention will be described in the following part of the present description, according to what is set down in the claims and with the aid of the accompanying tables of drawings, in which:
- figure 1 and figure 2 are different respective perspective views of a vase for plants or shrubs that is the object of the present invention;
- figure 3 is a lateral view of the vase of figure 1;
- figure 4 is a view from above of the vase of figure 1;
- figure 5 is a perspective view of the tray for plants or shrubs, also an object of the present invention;
- figures 6-8 are plan views, taken from different sides, of the tray of claim 5;
- figures 9 and 10 respectively illustrate a perspective view and a transversal section view of a further embodiment of the vase for plants or shrubs of the present invention.

### DESCRIPTION OF THE PREFERRED EMBODIMENTS

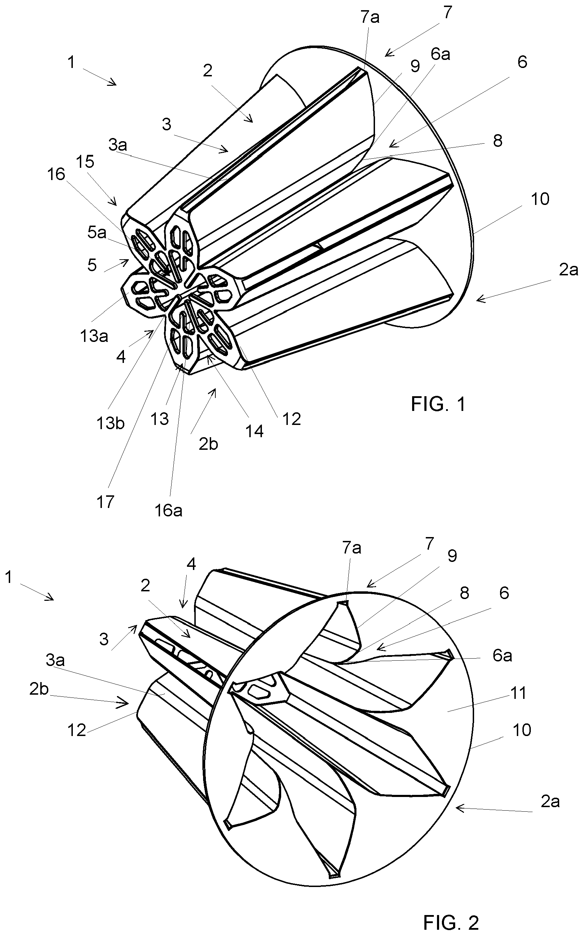

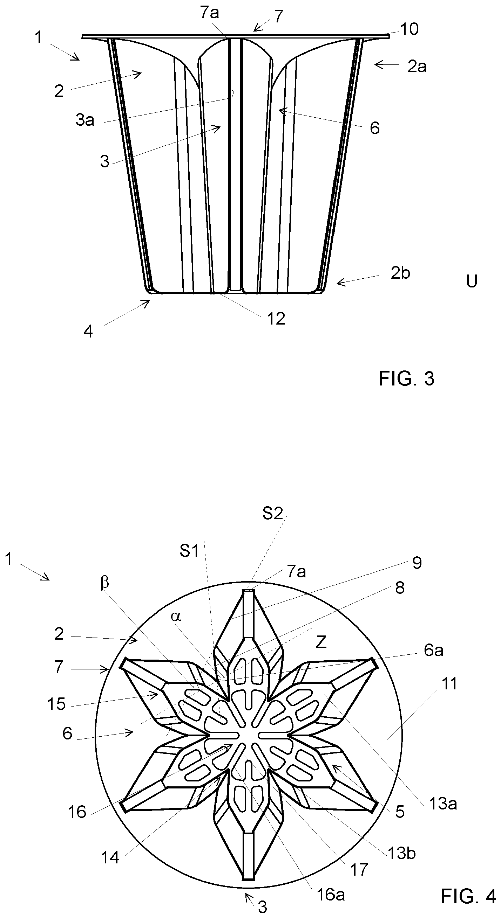

With reference to the accompanying tables of drawings, reference numeral (1) denotes a vase for plants or shrubs comprising: a lateral wall (2) which: is tubular-shaped; comprises a first plurality of through-holes (3) for enabling exit of roots of plants or shrubs; a base (4) which comprises a second plurality of through-holes (5) for enabling exit of roots of plants or shrubs. The lateral wall (2) in transversal section is star-shaped and forms a first plurality of internal cusps (6) and a first plurality of external cusps (7); each through-hole (3a) of the first plurality of through-holes (3) is arranged at an external cusp (7a) of the first plurality of external cusps (7). The vase (1) further comprises a first wall (8) and a second wall (9) which connect an internal cusp (6a) of the first plurality of internal cusps (6) with an immediately-following external cusp (7a) of the first plurality of external cusps (7); the first wall (8) and the second wall (9) are mutually contiguous and form there-between an internal angle of less than 180° (see figures 2 and 4).

The vase (1) is preferably a transplant vase (1), i.e. particularly suitable for plants and shrubs destined for transplanting. In other words, the vase (1) is predisposed to easily enable extraction of plants or shrubs from the vase (1), reducing to a minimum that part of trauma suffered by plants or shrubs when being transplanted, known as transplant shock, due to extraction from the vase (1).

It is specified that in the present description, the expression "external cusps (7, 15)" denotes the cusps having the point thereof facing towards outside the vase (1), while the expression "internal cusps (6, 14)" denotes the cusps having the point thereof facing towards inside the vase (1).

It is further specified that the expression "shape in transversal section" refers to the shape on a plane perpendicular to the longitudinal extension axis of the vase (1), in other words on a plane that is horizontal, when the vase (1) is in use configuration (U).

By use configuration (U) of the vase (1) is meant the configuration in which the vase (1) is rested on a rest plane (not illustrated), with the base (4) substantially parallel to the rest plane so as to be able to receive internally thereof the terrain for cultivation of a plant or a shrub.

The first wall (8) and the second wall (9) connect an internal cusp (6a) of the first plurality of internal cusps (6) with an immediately-following external cusp (7a) of the first plurality of external cusps (7).

With particular reference to figure 4, the first wall (8) extends starting from a first internal cusp (6a) of the first plurality of internal cusps (6) and the second wall (9) extends starting from a first external cusp (7a) of the first plurality of external cusps (7), which is immediately-following the first internal cusp (6a), to join one another. When the first wall (8) and the second wall (9) join one another, the first internal cusp (6a) and the first external cusp (7a) are connected to one another.

Each internal cusp (6a) of the first plurality of internal cusps (6) can be connected to each external cusp (7a) of the first plurality of external cusps (7) by means of the first wall (8) and the second wall (9).

Considering a first internal cusp (6a) and a first external cusp (7a), immediately consecutive to the first internal cusp (6a), the first wall (8) can extend on a first extension plane (S1), which first extension plane (S1) defines, when it intersects a plane (Z) that is parallel to the plane of symmetry of the vase (1) and which passes through the first internal cusp (6a), a first acute angle of inclination (α).

Likewise, considering a first internal cusp (6a) and a first external cusp (7a), immediately consecutive to the first internal cusp (6a), the second wall (9) can extend on a second extension plane (S2), which second extension plane (S2) defines, when it intersects a plane (Z) that is parallel to the plane of symmetry of the vase (1) and which passes through the first internal cusp (6a), a second acute angle of inclination (β) (see figure 4).

The first acute angle of inclination (α) can be greater than the second acute angle of inclination (β) (see figure 4).

The lateral wall (2) preferably comprises a first edge (10) which extends at the upper end (2a) of the lateral wall (2), when the vase (1) is in use configuration (U), and vase (1) comprises a surface (11) that extends starting from the first edge (10) and has a flared shape towards the outside of the vase (1) (see figure 2).

It has advantageously been found that during the extraction operation of the plant or shrub from the vase (1), the surface (11) having a flared shape facilitates the extraction of the plant or shrub, as the surface (11) accompanies the plant or shrub towards the outside of the vase (1) during the relative travel towards the outside of the vase (1).

The first edge (10) can delineate a circular or polygonal outline.

The surface (11) and the lateral wall (2) can be in a single body. In this way, the lateral wall (2) can have a flared shape, at the first edge (10), towards the outside of the vase (1).

Further, when the lateral wall (2) of the vase (1) is countersunk, the relative transversal section progressively grows towards the first edge (10) and has a trunco-conical development.

In other words, by "surface (11) having a flared shape" is intended a surface (11) at which a tangential plane at a point of the surface (11) has an inclination of less than 90°.

Alternatively, according to an embodiment that is not illustrated, the lateral wall (2) of the vase (1) can have a regular development along the extension thereof, i.e. the transversal section having a constant dimension along the whole extension of the lateral wall (2) of the vase (1).

The lateral wall (2) can comprise a second edge (12) which extends at the lower end (2b) of the lateral wall (2), when the vase (1) is in the use configuration (U) (see figure 1).

The base (4) can be arranged at the second edge (12) (see figure 3).

The base (4) and the lateral wall (2) can be in a single body.

During the use operations of the vase (1), no operation of mounting and demounting the vase (1) will advantageously not be required.

The through-holes (3a) of the first plurality of through-holes (3) are preferably slots and each slot extends along the whole extension of an external cusp (7a) of the first plurality of external cusps (7).

Advantageously, as along the whole extension of an external cusp (7a) of the first plurality of external cusps (7) only one slot is present, during the extraction operations of the plant or shrub from the vase (1), the plant or shrub slides along the lateral wall (2) towards the outside of the vase (1) and the roots, which have exited the vase (1) through the slot, slide along the slot towards the first edge (10) of the vase (1), without obstructing the extraction of the plant or shrub from the vase (1).

In other words, the slots, advantageously extending continuously along the external cusps (7a) of the first plurality of external cusps (7,) more easily facilitate the exit of the roots of plants or shrubs towards the outside and the triggering of the air-pruning phenomenon.

The base (4) preferably comprises a bottom (13) having: a first part (13a) of bottom (13) which is star-shaped and which defines a second plurality of internal cusps (14) and a second plurality of external cusps (15) and in which the second plurality of through-holes (5) is arranged; a second part (13b) of bottom (13) which extends from the first part (13a) of bottom (13) towards the central portion of the bottom (13) and comprising a plurality of tabs (16); each tab (16a) of the plurality of tabs (16) has a free end (17) such as to flex upon the action of a thrust force; the plurality of tabs (16) being positioned in such a way that the relative free end (17) of each tab (16a) of the plurality of tabs (16) is arranged at the central portion of the bottom (13) in order to facilitate extraction of the plants or shrubs from the vase (1) during the extraction operations (see figure 4).

The relative free end (17) of each tab (16a) of the plurality of tabs (16) advantageously ensures a greater flexibility of the bottom (13) with respect to the flexibility of a bottom (13) having a closed structure.

Further, during the extraction operations of the plant or shrub from the vase (1), it will be sufficient to apply a thrust force on the tabs (16a) of the plurality of tabs (16) to direct them towards the bottom terrain of the plant or shrub present in the vase (1) and the tabs (16a) will distribute the thrust force on the surface (11) of the bottom terrain of the plant or shrub, facilitating the extraction of the plant or shrub from the vase (1).

The bottom (13) of the base (4) preferably has a complementary shape to the shape in transversal section of the lateral wall (2).

In transversal section the bottom (13) of the base (4) is star-shaped so as to have a complementary shape to the shape in transversal section of the lateral wall (2). With particular reference to figure 4, the through-holes (5a) of the second plurality of through-holes (5) have a trapezoid shape and are distributed along a circular trajectory in the first part (13a) of the bottom (13).

The through-holes (3a, 5a) of the first plurality of through-holes (3) and the second plurality of through-holes (5) have dimensions that are such as to prevent the exit of terrain therefrom. In fact, the terrain in which plants or shrubs are cultivated in a vase is generally made up of compost earth, i.e. constituted by a combination of various substances, so as to be compact sufficiently not to exit from the through-holes (3a, 5a) of the first plurality of through-holes (3) and of the second plurality of through-holes (5), if of appropriate dimensions.

In particular, the through-holes (3a, 5a) of the first plurality of through-holes (3) and the second plurality of through-holes (5) can have dimensions that are variable according to the dimensions of the vase (1).

The vase (1) for plants or shrubs can be made of a polymer material, such as for example polyethylene or rubber or Acrylonitrile butadiene styrene (ABS). Alternatively, the vase (1) for plants or shrubs can be made of cardboard or other materials.

Further, the vase (1) for plants or shrubs can comprise a plurality of projections (not illustrated) which extend from the base (4). Each projection of the plurality of projections can extend downwards, when the vase (1) is in use configuration (U), starting from the base (4) and is arranged at an external cusp (7a) of the first plurality of external cusps (7), so as to be adjacent to one another.

Each projection of the plurality of projections supports the base (4) of the vase (1) at a predetermined distance from the terrain when the vase (1) is in use configuration (U). Further, each projection of the plurality of projections extends for length comprised between 1.5 cm and 3 cm.

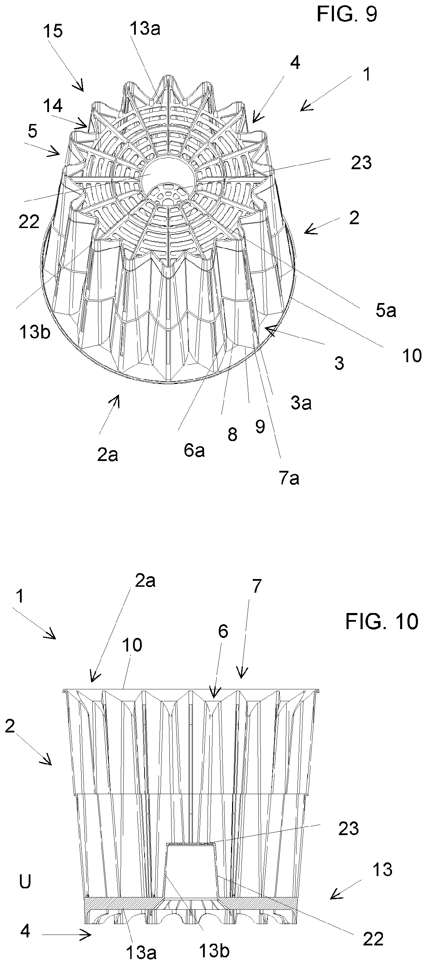

With reference to figures 9 and 10, according to a further embodiment of the vase (1), object of the present invention, the second part (13b) of bottom (13) can take on a cylindrical shape and starts and extends from the first part (13a) of bottom (13) towards the first edge (10).

The second part (13b) of the bottom (13) can move towards the first edge (10) to a maximum height of a third of the height of the vase (1).

According to this embodiment, the first part (13a) of bottom (13) can have a planar extension on a first plane.

Further, the second part (13b) of the bottom (13) can comprise: a relative lateral wall (22) which is tubular-shaped and which extends starting from the first part (13a) of bottom (13); a relative top wall (23) which extends starting from the relative lateral wall (22) and which has a planar extension on a second plane.

The second plane can be parallel to the first plane.

In this embodiment, the top wall (23) can comprise a part of the through-holes (5a) of the second plurality of through-holes (5).

When the vase (1) is in use configuration (U), the first plane and the second plane are arranged at different heights from one another.

Further, when the vase (1) is in use configuration (U), the second plane is at a height, with respect to the terrain, that is greater than the height of the first plane.

In this particular embodiment, a part of the roots will advantageously reach the part of the through-holes (5a) of the second plurality of through-holes (5) arranged on the top wall (23) in advance with respect to the part of roots that reach the through-holes (5a) of the second plurality of through-holes (5) arranged on the first part (13a) of the bottom (13).

In this way, for this part of the roots, in particular the roots that grow towards the base (4) of the vase (1), there will be an advance phenomenon of air-pruning, facilitating the development of a root system that is sturdier and more fibrous.

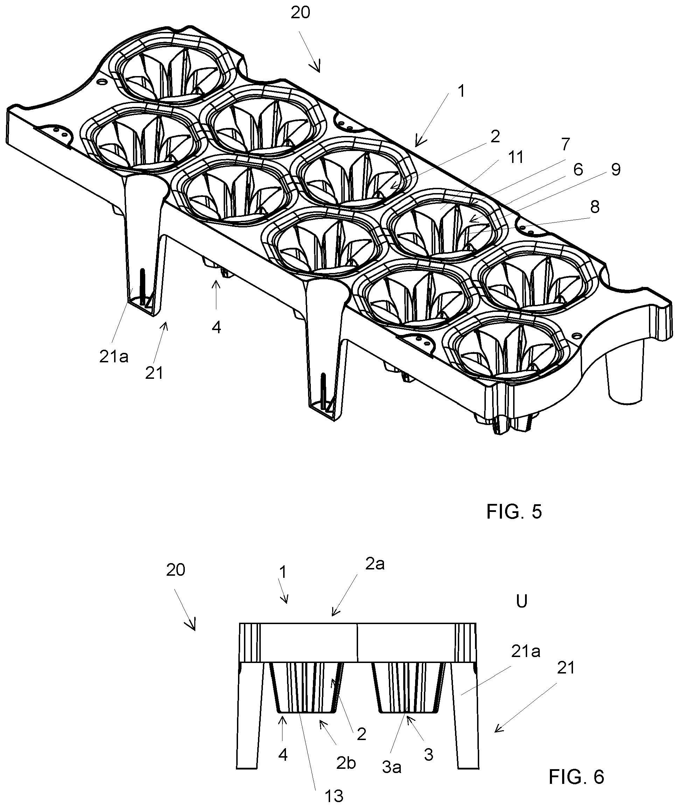

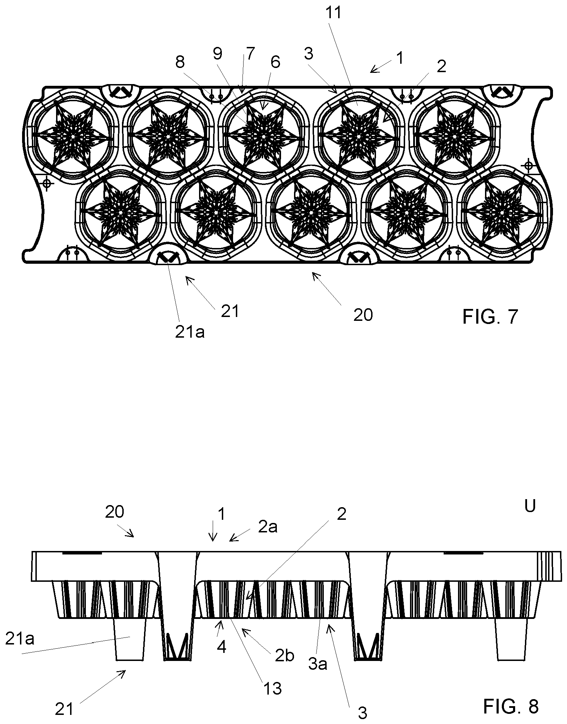

The following includes a description of a tray (20) for plants or shrubs, also object of the present invention, comprising at least a vase (1) for plants or shrubs, having the characteristics as revealed in the foregoing, and comprising a plurality of support elements (21) for supporting the at least a vase (1) at a predetermined distance from the terrain when the at least a vase (1) is in use configuration (U) (see figures 5-8).

The tray (20), by bearing one or more vases together, advantageously enables arranging, on the terrain, a plurality of vases flanked to one another at the same time.

Further, the support elements (21a) of the plurality of support elements (21) ensure that the base (4) of the at least a vase (1) is not in direct contact with the terrain on which the tray (20) is arranged, facilitating the correct oxygenation of the roots of the plant or shrub.

The tray (20) for plants or shrubs can be made of a polymer material, such as for example polyethylene or rubber or Acrylonitrile butadiene styrene (ABS).

Alternatively, the tray (20) for plants or shrubs can be made of cardboard or other materials.

The tray (20) for plants or shrubs can comprise a plurality of vases (1), which vases (1) have the above-described characteristics and can define, when arranged flanked to one another, a polygonal shape of the tray (20) (for example rectangular) or a circular shape of the tray (20).

The plurality of support elements (21) preferably supports the base (4) of the at least a vase (1) at a distance comprised between 3-10 cm from the terrain when the at least a vase (1) is in use configuration (U) (see figures 5, 6 and 8).

## Claims

1. A vase (1) for plants or shrubs, comprising:
a lateral wall (2) which: is tubular-shaped; and which comprises a first plurality of through-holes (3) for enabling exit of roots of plants or shrubs;
a base (4) which comprises a second plurality of through-holes (5) for enabling exit of roots of plants or shrubs;
wherein the lateral wall (2) in transversal section is star-shaped and forms a first plurality of internal cusps (6) and a first plurality of external cusps (7);
each through-hole (3a) of the first plurality of through-holes (3) is arranged at an external cusp (7a) of the first plurality of external cusps (7); **characterised in that**
it comprises a first wall (8) and a second wall (9) which connect an internal cusp (6a) of the first plurality of internal cusps (6) with an immediately-following external cusp (7a) of the first plurality of external cusps (7);
and **in that** the first wall (8) and the second wall (9) are mutually contiguous and form there-between an internal angle of less than 180°.

2. The vase (1) for plants or shrubs of the preceding claim, wherein: the lateral wall (2) comprises a first edge (10) which extends at the upper end (2a) of the lateral wall (2), when the vase (1) is in use configuration (U); it comprises a surface (11) that extends starting from the first edge (10) and has a flared shape towards the outside of the vase (1).

3. The vase (1) for plants or shrubs of any one of the preceding claims, wherein the through-holes (3a) of the first plurality of through-holes (3) are slots and each slot extends along the whole extension of an external cusp (7a) of the first plurality of external cusps (7).

4. The vase (1) for plants or shrubs of any one of the preceding claims, wherein the base (4) comprises a bottom (13) having: a first part (13a) of bottom (13) which is star-shaped and which defines a second plurality of internal cusps (14) and a second plurality of external cusps (15) and wherein the second plurality of through-holes (5) is arranged; a second part (13b) of bottom (13) which extends from the first part (13a) of bottom (13) towards the central portion of the bottom (13) and comprising a plurality of tabs (16);
each tab (16a) of the plurality of tabs (16) has a free end (17) such as to flex upon the action of a thrust force;
the plurality of tabs (16) being positioned in such a way that the relative free end (17) of each tab (16a) of the plurality of tabs (16) is arranged at the central portion of the bottom (13) in order to facilitate extraction of the plants or shrubs from the vase (1) during the extraction operations.

5. The vase (1) for plants or shrubs of the preceding claim, wherein the bottom (13) of the base (4) has a complementary shape to the shape of the lateral wall (2) in transversal section.

6. A tray (20) for plants or shrubs, comprising:
at least a vase (1) for plants or shrubs of any one of the preceding claims;
a plurality of support elements (21) for supporting the at least a vase (1) at a predetermined distance from the terrain when the at least a vase (1) is in use configuration (U).

7. The tray (20) for plants or shrubs of the preceding claim, wherein the plurality of support elements (21) supports the base (4) of the at least a vase (1) at a distance comprised between 3-10 cm from the terrain when the at least a vase (1) is in use configuration (U).

## Patentansprüche

1. Topf (1) für Pflanzen oder Sträucher, umfassend:
eine seitliche Wand (2), die: rohrförmig gestaltet ist; und die eine erste Vielzahl von Durchgangslöchern (3) umfasst, um den Austritt von Wurzeln von Pflanzen oder Sträuchern zu ermöglichen;
eine Basis (4), die eine zweite Vielzahl von Durchgangslöchern (5) umfasst, um den Austritt von Wurzeln von Pflanzen oder Sträuchern zu ermöglichen;
wobei die seitliche Wand (2) im Querschnitt sternförmig ist und eine erste Vielzahl von inneren Spitzen (6) und eine erste Vielzahl von äußeren Spitzen (7) bildet;
und jedes Durchgangsloch (3a) der ersten Vielzahl von Durchgangslöchern (3) an einer äußeren Spitze (7a) der ersten Vielzahl von äußeren Spitzen (7) angeordnet ist;
**dadurch gekennzeichnet, dass** er eine erste Wand (8) und eine zweite Wand (9) umfasst, die eine innere Spitze (6a) der ersten Vielzahl von inneren Spitzen (6) mit einer unmittelbar darauf folgenden äußeren Spitze (7a) der ersten Vielzahl von äußeren Spitzen (7) verbinden;
und dadurch, dass die erste Wand (8) und die zweite Wand (9) aneinander angrenzend sind und zwischen sich einen Innenwinkel bilden, der kleiner als 180° ist.

2. Topf (1) für Pflanzen oder Sträucher nach dem vorhergehenden Anspruch, wobei: die seitliche Wand (2) einen ersten Rand (10) umfasst, der sich an dem oberen Ende (2a) der seitlichen Wand (2) erstreckt, wenn der Topf (1) in der Gebrauchskonfiguration (U) ist; er eine Oberfläche (11) umfasst, die sich ausgehend von dem ersten Rand (10) erstreckt und eine zur Außenseite des Topfes (1) hin aufgeweitete Form aufweist.

3. Topf (1) für Pflanzen oder Sträucher nach einem der vorhergehenden Ansprüche, wobei die Durchgangslöcher (3a) der ersten Vielzahl von Durchgangslöchern (3) Schlitze sind und jeder Schlitz sich entlang der gesamten Erstreckung einer äußeren Spitze (7a) der ersten Vielzahl von äußeren Spitzen (7) erstreckt.

4. Topf (1) für Pflanzen oder Sträucher nach einem der vorhergehenden Ansprüche, wobei die Basis (4) einen Boden (13) umfasst, der wiederum aufweist: einen ersten Teil (13a) des Bodens (13), der sternförmig ist und eine zweite Vielzahl von inneren Spitzen (14) und eine zweite Vielzahl von äußeren Spitzen (15) definiert, und in dem die zweite Vielzahl von Durchgangslöchern (5) angeordnet ist; einen zweiten Teil (13b) des Bodens (13), der sich von dem ersten Teil (13a) des Bodens (13) aus zu dem mittleren Abschnitt des Bodens (13) erstreckt und eine Vielzahl von Laschen (16) umfasst,
wobei jede Lasche (16a) der Vielzahl von Laschen (16) ein freies Ende (17) aufweist, so dass sie sich unter Einwirkung einer Schubkraft biegen kann;
und die Vielzahl von Laschen (16) derart positioniert sind, dass das entsprechende freie Ende (17) jeder Lasche (16a) der Vielzahl von Laschen (16) an dem mittleren Abschnitt des Bodens (13) angeordnet ist, um das Entnehmen der Pflanzen oder Sträucher aus dem Topf (1) während des Entnahmevorgangs zu erleichtern.

5. Topf (1) für Pflanzen oder Sträucher nach dem vorhergehenden Anspruch, wobei die Form des Bodens (13) der Basis (4) komplementär zu der Form der seitlichen Wand (2) im Querschnitt ist.

6. Tray (20) für Pflanzen oder Sträucher, umfassend:
zumindest einen Topf (1) für Pflanzen oder Sträucher nach einem der vorhergehenden Ansprüche,
eine Vielzahl von Stützelementen (21) zum Tragen des zumindest einen Topfes (1) in einem vorgegebenen Abstand vom Erdboden, wenn sich der zumindest eine Topf (1) in der Gebrauchskonfiguration (U) befindet.

7. Tray (20) für Pflanzen oder Sträucher nach dem vorhergehenden Anspruch, wobei die Vielzahl von Stützelementen (21) die Basis (4) des zumindest einen Topfes (1) in einem Abstand abstützt. der zwischen 3-10 cm vom Erdboden beträgt, wenn sich der zumindest eine Topf (1) in der Gebrauchskonfiguration (U) befindet.

## Revendications

1. Un pot (1) pour plantes ou arbustes, comprenant :
une paroi latérale (2) qui : a une forme tubulaire ; et qui comprend une première pluralité de trous traversants (3) pour permettre la sortie de racines de plantes ou d'arbustes ;
une base (4) qui comprend une deuxième pluralité de trous traversants (5) pour permettre la sortie de racines de plantes ou d'arbustes ;
dans lequel la paroi latérale (2) en coupe transversale est en forme d'étoile et définit une première pluralité de cuspides intérieures (6) et une première pluralité de cuspides extérieures (7) ;
chaque trou traversant (3a) de la première pluralité de trous traversants (3) est disposé au niveau d'une cuspide extérieure (7a) de la première pluralité de cuspides extérieures (7) ; **caractérisé en ce qu'**il comprend une première paroi (8) et une deuxième paroi (9) qui relient une cuspide intérieure (6a) de la première pluralité de cuspides intérieures (6) à une cuspide extérieure (7a) immédiatement successive de la première pluralité de cuspides extérieures (7) ;
et **en ce que** la première paroi (8) et la deuxième paroi (9) sont mutuellement contiguës et forment entre elles un angle intérieur inférieur à 180°.

2. Le pot (1) pour plantes ou arbustes selon la revendication précédente, dans lequel : la paroi latérale (2) comprend un premier bord (10) qui se développe au niveau de l'extrémité supérieure (2a) de la paroi latérale (2), lorsque le pot (1) est en configuration d'utilisation (U) ; il comprend une surface (11) qui se développe à partir du premier bord (10) et a une forme évasée vers l'extérieur du pot (1).

3. Le pot (1) pour plantes ou arbustes selon l'une quelconque des revendications précédentes, dans lequel les trous traversants (3a) de la première pluralité de trous traversants (3) sont des fentes et chaque fente se développe tout le long de l'extension d'une cuspide extérieure (7a) de la première pluralité de cuspides extérieures (7).

4. Le pot (1) pour plantes ou arbustes selon l'une quelconque des revendications précédentes, dans lequel la base (4) comprend un fond (13) ayant : une première partie (13a) de fond (13) qui est en forme d'étoile et qui définit une deuxième pluralité de cuspides intérieures (14) et une deuxième pluralité de cuspides extérieures (15) et dans laquelle la deuxième pluralité de trous traversants (5) est disposée ; une deuxième partie (13b) de fond (13) qui se développe à partir de la première partie (13a) de fond (13) vers la portion centrale du fond (13) et comprenant une pluralité de languettes (16) ;
chaque languette (16a) de la pluralité de languettes (16) a une extrémité libre (17) qui est telle qu'elle fléchit sous l'action d'une force de poussée ;
la pluralité de languettes (16) étant positionnée de manière à ce que l'extrémité libre (17) correspondante de chaque languette (16a) de la pluralité de languettes (16) soit disposée au niveau de la portion centrale du fond (13) afin de faciliter l'extraction des plantes ou arbustes du pot (1) lors des opérations d'extraction.

5. Le pot (1) pour plantes ou arbustes selon la revendication précédente, dans lequel le fond (13) de la base (4) a une forme complémentaire à la forme de la paroi latérale (2) en coupe transversale.

6. Un plateau (20) pour plantes ou arbustes, comprenant :
au moins un pot (1) pour plantes ou arbustes selon l'une quelconque des revendications précédentes ;
une pluralité d'éléments de support (21) pour supporter ledit au moins un pot (1) à une distance prédéfinie du terrain lorsque ledit au moins un pot (1) est en configuration d'utilisation (U).

7. Le plateau (20) pour plantes ou arbustes selon la revendication précédente, dans lequel la pluralité d'éléments de support (21) supporte la base (4) dudit au moins un pot (1) à une distance comprise entre 3-10 cm du terrain lorsque ledit au moins un pot (1) est en configuration d'utilisation (U).
